# DEMANDE DE BREVET EUROPEEN

(11) **EP 3 139 460 A1**
(43) Date de publication de la demande: **08.03.2017**
(21) Numéro de dépôt: 16186472.3
(22) Date de dépôt: 31.08.2016
(51) Int. Cl.: H02G 3/04, H02G 3/06

(54) **TRONÇON DE CHEMIN DE CÂBLES, CHEMIN DE CÂBLES ET PROCÉDÉ DE MONTAGE ASSOCIÉS**

(30) Priorité: 01.09.2015 FR 1558099
(71) Demandeur: Gewiss France SAS, 21430 Liernais (FR)
(72) Inventeur: LEGUY, Claude, 21430 MARCHESEUIL (FR)
(74) Mandataire: Lavoix

(57) **Abrégé**

Tronçon (3) de chemin de câbles, qui comprend :
- des fils de trame (5), qui comprennent chacun une partie centrale (9) et deux parties latérales (11), deux des fils de trame (5) formant des fils terminaux (17, 19), chacune des parties latérales du deuxième fil terminal (19) comprenant une ailette d'encliquetage (37) dirigée à l'écart de l'autre partie latérale, et
- des fils de chaîne (7), qui présentent une extrémité (23) reliée au deuxième fil terminal, les fils de chaîne (7) incluant deux fils de rive (25),
le tronçon (3) étant caractérisé en ce que chaque fil de rive (25) comprend, à partir de l'extrémité (23), une partie en crochet (29) qui forme une zone concave (31) d'accueil d'un premier fil terminal d'un autre tronçon et en ce que la zone concave d'accueil a sa concavité orientée dans une direction opposée à l'autre fil de rive.

## Description

La présente invention concerne un tronçon de chemin de câbles, formé par un treillis de fils soudés, un chemin de câbles associé et un procédé de montage d'un tel chemin de câbles.

En particulier, l'invention concerne des tronçons de chemin de câbles, qui sont conçus pour former un chemin de câbles une fois assemblés les uns avec les autres.

EP-A-0 973 238 décrit un chemin de câbles en treillis de fils soudés entre eux, présentant une section en U. Ce chemin de câbles est formé par une succession de tronçons assemblés. Chaque tronçon présente une extrémité de section réduite conçue pour être introduite dans une extrémité de section élargie d'un autre tronçon adjacent. L'extrémité de section élargie présente deux fils de trame disposés de façon voisine pour définir une fente qui a la même largeur qu'un fil de trame. Ainsi, un fil de trame de l'extrémité de section réduite est inséré dans cette encoche pour assembler les tronçons entre eux. L'insertion de l'extrémité d'un tronçon dans l'extrémité du tronçon adjacent se fait ainsi par translation d'un tronçon par rapport à l'autre selon une direction transversale dirigée vers l'intérieur de la section en U du tronçon dont l'extrémité est de plus forte section.

Ce chemin de câbles présente l'inconvénient d'être relativement coûteux à fabriquer dans la mesure où plusieurs fils de trame sont nécessaires pour former l'encoche.

FR-A-3 003 098 décrit un chemin de câbles en treillis et à section en U, formé par des tronçons comportant chacun une extrémité mâle et une extrémité femelle. Un fil de trame de l'extrémité femelle comprend des créneaux qui s'étendent vers l'intérieur dans le plan du fond du tronçon. L'extrémité mâle comprend, quant à elle, une section rétrécie, à la fois en hauteur et en largeur, et a un fil de trame pourvu de décrochés centraux qui présentent une courbure en saillie par rapport au plan du fond du tronçon. Les créneaux d'un premier tronçon sont ainsi aptes à crocheter les décrochés centraux d'un deuxième tronçon. Par ailleurs, le fil de trame de l'extrémité mâle comprend des décrochés latéraux qui sont conçus pour être encliquetés dans des fils de chaîne de l'extrémité femelle d'un tronçon adjacent. L'assemblage des tronçons est ainsi effectué en deux étapes : une première étape d'encliquetage des décrochés latéraux, puis une étape de translation longitudinale d'un tronçon par rapport à l'autre pour entraîner le crochetage du décroché par le créneau.

Ce chemin de câbles présente l'inconvénient d'être relativement coûteux à fabriquer, dans la mesure où de nombreux fils doivent être conformés, et d'être relativement long à assembler, dans la mesure où au moins deux mouvements relatifs des tronçons selon des directions différentes sont requis pour solidariser ces derniers.

FR-A-3 007 592 décrit un chemin de câbles en treillis à section transversale en U définissant un fond et des ailes. Ce chemin de câbles est formé par des tronçons comportant chacun des pièces d'assemblage latérales rapportées sur les ailes et sur le fond à l'extrémité du tronçon. Les pièces d'assemblage comprennent un crochet définissant une concavité tournée vers l'extérieur du tronçon et dans laquelle un fil de trame du tronçon adjacent peut être reçu, ce qui permet l'assemblage des tronçons entre eux.

Ce chemin de câbles s'avère coûteux et complexe à fabriquer compte-tenu des pièces d'assemblage qu'il est nécessaire de rapporter sur le treillis.

FR-A-2 966 987 décrit un chemin de câbles comprenant des tronçons en treillis de fils, à section en U, et pouvant être accouplés les uns avec les autres. Les deux extrémités de chaque tronçon sont différentes l'une de l'autre. Une première d'entre elles comprend deux fils de trame en U. Au voisinage de cette première extrémité, chaque fil de chaîne est pourvu d'un coude rentrant et d'un téton intérieur. La deuxième d'entre elles comprend également deux fils de trame, dont la distance d'écart est la même que celle des fils de trame de la première extrémité. L'un des fils de trame de la deuxième extrémité est également pourvu de tétons extérieurs disposés au voisinage des intersections entre le fil de trame et l'extrémité des fils de chaîne. Ces derniers sont quant à eux pourvus de doubles coudes rentrants. Pour assembler deux tronçons adjacents, il faut effectuer une translation d'un tronçon par rapport à l'autre selon une direction transversale, en enclenchant les paires de fils de trame des extrémités respectives des tronçons l'un contre l'autre. L'accouplement des tronçons est ensuite bloqué à l'aide de dispositifs de réunion rapportés.

On comprend que la structure de ce chemin de câbles est relativement complexe, ce qui occasionne un coût de fabrication relativement élevé. En outre, son assemblage nécessite de rapporter des dispositifs de réunion séparés, ce qui représente une perte de temps substantielle.

FR-A1-2 971 100 décrit une goulotte pour chemin de câbles, comprenant des fils longitudinaux et transversaux soudés en un treillis qui définit un fond de la goulotte, ainsi que deux côtés s'étendant de part et d'autre de ce fond. Cette goulotte est pourvue, le long d'un axe longitudinal, d'une première et d'une deuxième extrémités, telles que la première extrémité peut être engagée et reçue dans la deuxième extrémité d'une goulotte identique. La première extrémité porte, sur l'extérieur de chacun de ses côtés, un barreau allongé dont un axe longitudinal est parallèle à l'axe longitudinal de la goulotte.

Néanmoins, la réalisation des barreaux et leur intégration à cette goulotte connue représentent un coût substantiel.

En conséquence, l'invention vise à remédier aux inconvénients mentionnés ci-avant en proposant un nouveau tronçon de chemin de câbles particulièrement facile et peu coûteux à fabriquer et à assembler.

L'invention a pour objet un tronçon de chemin de câbles tel que défini dans la revendication 1.

Grâce à l'invention, une seule des extrémités du tronçon nécessite d'être conformée de façon particulière, le treillis formant le reste du tronçon pouvant être constitué de motifs répétés, de sorte que le tronçon est particulièrement facile et peu coûteux à fabriquer. En outre, l'encliquetage des extrémités entre elles, assuré par les ailettes d'encliquetage, associé à l'accrochage des extrémités entre elles, à l'aide des parties en crochet, permet un assemblage particulièrement simple, rapide et fiable des tronçons entre eux.

Les revendications 2 à 7 définissent d'autres caractéristiques avantageuses de l'invention.

L'invention a également pour objet un chemin de câbles tel que défini dans la revendication 8.

Une caractéristique avantageuse de l'invention est définie dans la revendication 9.

L'invention a pour objet, en outre, un procédé de montage tel que défini dans la revendication 10.

Une caractéristique avantageuse de l'invention est définie dans la revendication 11.

L'invention sera mieux comprise à la lecture de la description qui va suivre, donnée uniquement à titre d'exemple non limitatif et non exhaustif et faite en se référant aux dessins dans lesquels :
- La figure 1 est une vue en perspective d'un tronçon de chemin de câbles selon un premier mode de réalisation conforme à l'invention,
- La figure 2 est une vue de dessus du tronçon de la figure 1,
- La figure 3 est une vue de côté du tronçon des figures 1 et 2,
- La figure 4 est une vue de face à plus grande échelle du tronçon des figures 1 à 3,
- La figure 5 est une vue en perspective d'un chemin de câbles comprenant deux tronçons identiques à celui des figures 1 à 4,
- La figure 6 est une coupe transversale du chemin de câbles de la figure 5, représenté en cours d'assemblage, et
- La figure 7 est une vue en perspective d'un tronçon de chemin de câbles selon un deuxième mode de réalisation conforme à l'invention.

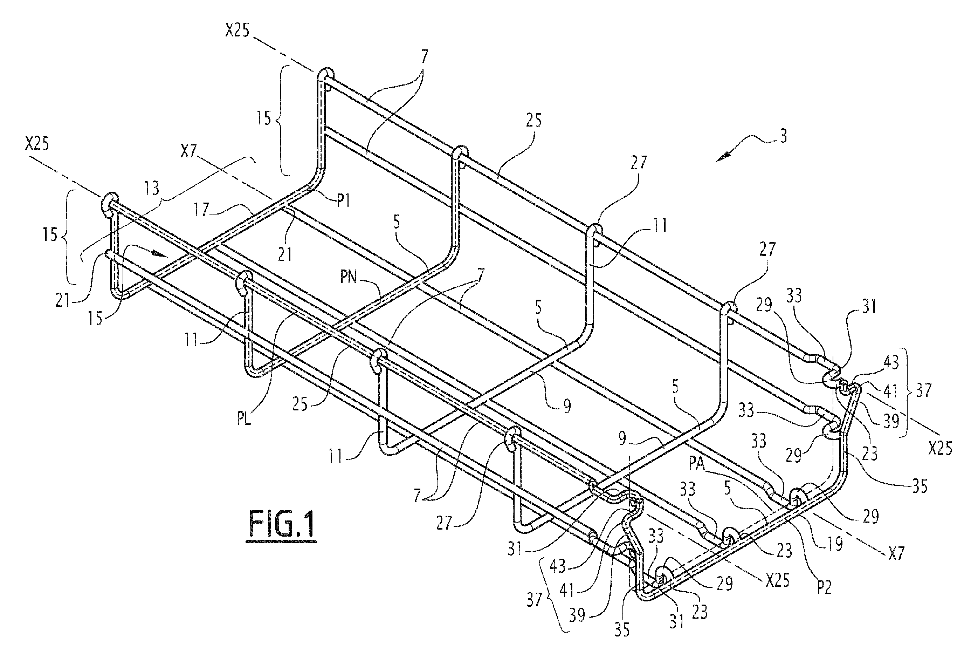

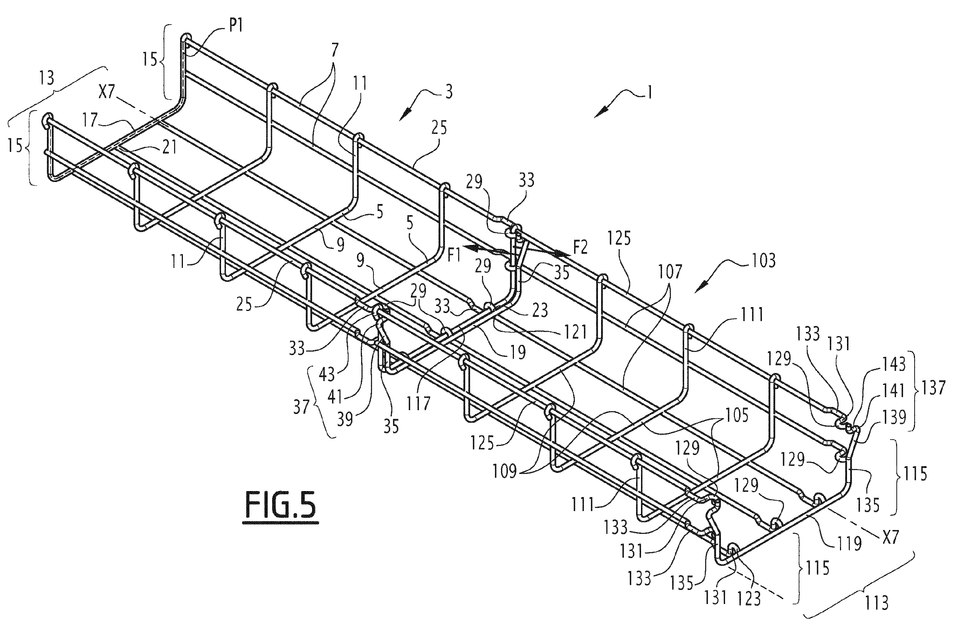

Sur la figure 1 est représenté un tronçon de chemin de câbles 3 qui est conçu pour former, par assemblage avec d'autres tronçons compatibles, du même genre ou identiques, un chemin de câbles 1 tel qu'illustré par exemple à la figure 5.

Le chemin de câbles 1 illustré à la figure 5 est formé par deux tronçons 3 et 103 identiques assemblés bout à bout. Les signes de références du tronçon 103 sont les mêmes que ceux du tronçon 3, augmentés de 100, pour désigner les éléments similaires ou identiques des tronçons 3 et 103.

De manière générale, le chemin de câbles 1 est modulaire et peut être formé par au moins deux tronçons 3 et 103. Le nombre de tronçons ainsi assemblés détermine la longueur du chemin de câbles.

Le chemin de câbles 1, et en particulier les tronçons 3 et 103, sont formés par des treillis de fils soudés, c'est-à-dire un maillage. Chaque fil est réalisé en métal optionnellement recouvert par une couche externe protectrice, en étant plié et tordu de façon définitive selon un profil. La forme globale du treillis est obtenue par combinaison des différents profils des fils qui le constituent.

Chaque tronçon 3 comprend des fils de trame 5, c'est-à-dire des fils transversaux, et des fils de chaîne 7, c'est-à-dire des fils longitudinaux, qui sont soudés les uns aux autres afin de former le treillis. En pratique, les fils de trame 5 présentent chacun un profil courbe et sont, de préférence, régulièrement espacés les uns des autres. Les fils de chaîne 7 relient quant à eux chacun les fils de trame 5 entre eux et sont sensiblement parallèles entre eux. Le treillis est ainsi formé par un maillage de fils à motif régulier. De façon générale, chaque fil de trame 5 est perpendiculaire aux fils de chaîne 7 avec lesquels il est soudé.

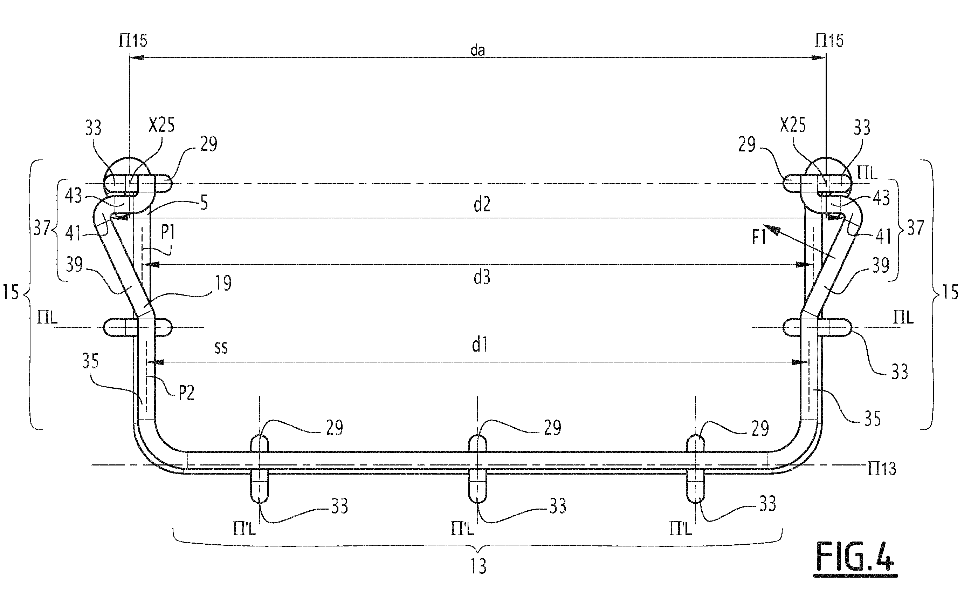

Chacun des fils de trame 5 comprend une partie centrale 9 et deux parties latérales 11 qui prolongent chacune la partie centrale 9 à partir des extrémités de cette dernière. Tel que cela est illustré aux figures 1 à 4, la partie centrale 9 est préférentiellement rectiligne, les deux parties latérales 11 présentant une inclinaison par rapport à la partie centrale 9 de manière à définir avec cette dernière une forme en U du fil de trame 5. De préférence, les parties latérales 11 sont également sensiblement rectilignes sur au moins à la majorité de leur longueur et forment chacune un angle droit avec la partie centrale 9. En variante, la partie centrale 9 est courbe, de même que, optionnellement, les parties latérales 11. Dans l'exemple des figures, les parties centrales 9 rectilignes définissent un fond 13 du treillis, qui est lui-même sensiblement plan et définit un plan π13 visible à la figure 4. Les parties latérales 11 forment quant à elle deux ailes 15 du treillis qui font saillies latéralement du fond 13 de sorte que le treillis forme un tunnel en U retourné, au sein duquel des câbles ou des tuyaux peuvent être disposés, de façon sensiblement parallèle aux fils de chaîne 7. Si les ailes 15 sont représentées perpendiculaires au fond 13, elles peuvent toutefois présenter une orientation différente, par exemple divergente ou convergente, tant qu'elles sont dirigées du même côté du plan du fond 13. Les ailes 15 définissent chacune un plan π15 perpendiculaire au plan π13.

Deux des fils de trame 5 forment respectivement un premier fil terminal 17 du treillis, conformé selon un profil P1, et un deuxième fil terminal 19 du treillis, conformé avec un profil P2. Les fils terminaux 17 et 19 sont des fils de trame particuliers qui sont situés respectivement aux extrémités longitudinales du treillis. Chacun des fils de trame intermédiaires 7, situés entre les fils terminaux 17 et 19, est conformé selon un profil PN. Les profils P1 et PN sont identiques, alors que le un profil P2 est différent de celui des autres fils de trame 5 et notamment de celui du premier fil terminal 17. Néanmoins, le profil P1 du premier fil terminal 7, le profil PN des fils de trame intermédiaires 5 et le profil P2 du deuxième fil terminal 19 présentent globalement une forme de U.

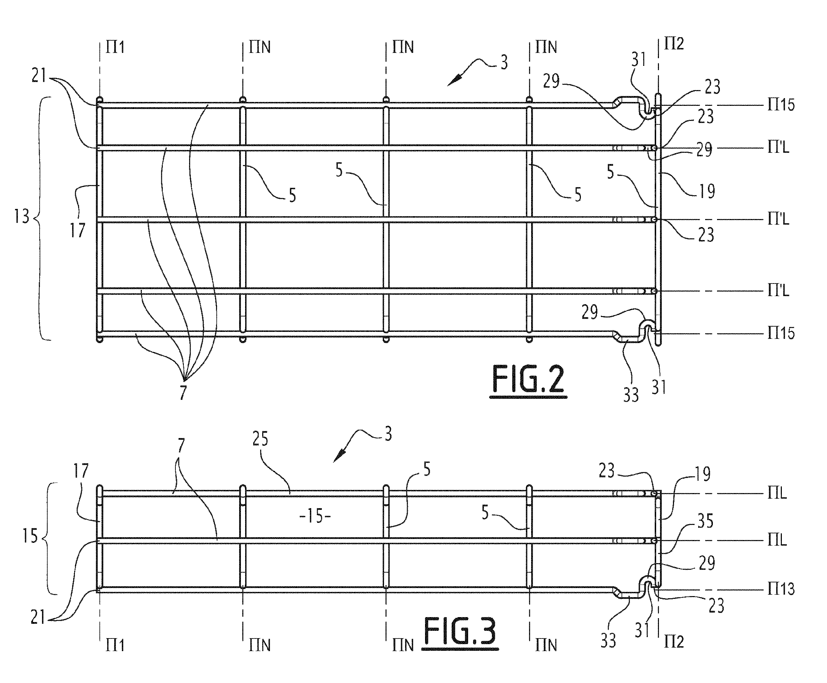

Le profil P1 s'étend dans un plan transversal π1, le profil P2 dans un plan transversal π2, et les profils transversaux PN dans des plans transversaux πN, comme illustrés aux figures 2 et 3. Les plans π1, π2 et πN sont de préférence parallèles entre eux et disposés à égale distance l'un de l'autre.

Les fils de chaîne 7 sont chacun connectés à chacun des fils de trame 5, ou pour le moins à une majorité d'entre eux, et s'étendent chacun selon un profil PL qui est majoritairement orthogonal aux plans transversaux définis par les fils 5. En particulier, une première extrémité 21 de chacun des fils 7 est connectée au premier fil terminal 17 et ne s'étend pas au-delà de ce dernier. Une deuxième extrémité 23 de chaque fil de chaîne 7 est, quant à elle, connectée au deuxième fil terminal 19 et ne s'étend pas au-delà de ce dernier.

Chacun des profils PL des fils de chaîne 7 est inclus dans un plan longitudinal, chaque plan longitudinal étant orthogonal à l'ensemble des plans transversaux.

Tel qu'illustré aux figures 1 à 4, trois fils de chaîne 7 forment le fond 13 avec les parties centrales 9 des fils de trame 5. Chaque aile 15 est quant à elle formée par deux fils de chaîne 7 et par les parties latérales 11 des fils de trame 5. Les fils de chaîne 7 incluent deux fils de rive 25, qui relient chacun les fils de trame 5 entre eux par l'intermédiaire de l'une de leur partie latérale 11 respective. Les fils de rive 25 sont situés aux extrémités des fils de trame 5 et forment un bord longitudinal du treillis. Les fils de rive 25 sont soudés aux extrémités des fils de trame 5. De préférence, les fils de trame 5 sont recourbés en crochet à leurs extrémités, de façon à former chacun une attache courbée 27 entourant le fil de rive 25. La forme particulière de cette attache courbée 27 prévient tout risque de griffure par l'extrémité des parties latérales 11. A titre de variante, l'extrémité des fils de trame 5 peut au contraire ne pas être courbée, de sorte que les parties latérales 11 des fils de trame 5 sont entièrement rectilignes, ce qui permet de simplifier la fabrication du tronçon 3.

Comme illustré aux figures 2 à 4, les profils PL des fils 7 et 25 qui forment les ailes 15 définissent chacun un plan πL dans lequel ils s'étendent. De même, les profils PL des fils 7 qui forment le fond 13 définissent chacun un plan π'L dans lequel ils s'étendent.

Les plans π'L sont parallèles entre eux et perpendiculaires aux plans πL. En outre, les plans πL sont perpendiculaires aux plans π15 et les plans π'L sont perpendiculaires aux plans π13.

Chaque fil de rive 25 est coaxial, sur au moins la majorité de son profil PL, à un axe de rive X25. Les fils de rive 25 définissent ainsi chacun un axe de rive X25, lesquels axes de rive X25 sont parallèles entre eux et perpendiculaire aux plans transversaux π1, π2 et πN définis par les fils de trame 5. Chaque fil de rive 25 comprend à partir de son extrémité 23, une partie en crochet 29 qui forme une zone concave d'accueil 31 en forme de U, la concavité de chaque zone concave d'accueil 31 étant orientée dans une direction opposée à l'autre fil de rive 25, c'est-à-dire vers l'extérieur du tronçon 3. Les zones concaves d'accueil 31 sont ainsi ouvertes vers l'extérieur de la section transversale en U du tronçon 3 et sont suffisamment larges pour pouvoir accueillir un fil dont le diamètre est égal au fil utilisé dans le treillis du tronçon 3. Tel que cela est représenté à la figure 5, le tronçon 3 est prévu pour être assemblé avec un deuxième tronçon 103, le premier fil terminal 117 du deuxième tronçon 103 étant accroché dans les zones concaves d'accueil 31 des parties en crochet 29 du premier tronçon 3. Les parties en crochet 29 sont formées par le fil de rive 25, le profil PL présentant à cet endroit une courbure correspondante. Les plans πL des fils de rive 25 sont préférentiellement coplanaires, de sorte que les parties en crochet 29 s'étendent dans le même plan πL.

Chaque fil de chaîne 5 est avantageusement pourvu d'une partie en crochet 29, telle que définie ci-avant, laquelle forme une zone concave d'accueil 31 qui s'ouvre sur l'extérieur de la section transversale en U du tronçon 3. De la même manière que les axes de rive X25 sont définis pour les fils de rive 25, on définit des axes longitudinaux X7 le long desquels s'étendent majoritairement les profils PL des autres fils de chaîne 7. Chaque partie en crochet 29 s'étend dans le plan longitudinal πL ou π'L du profil PL associé. Chaque partie en crochet 29 s'étend entre le deuxième fil terminal 19 et le fil de trame 5 intermédiaire le plus proche du deuxième fil terminal 19.

Les parties en crochet 29 s'étendent de façon désaxée par rapport à l'axe longitudinal X7 ou l'axe de rive X25 respectivement associé, en direction de l'intérieur de la section transversale en U du tronçon 3. L'extrémité 23 qui termine la partie en crochet 29 est quant à elle coaxiale avec l'axe longitudinal X7 ou l'axe de rive X25 respectivement. Un fil de même épaisseur, ou de même diamètre, que les fils formant le treillis peut ainsi être admis dans chaque zone concave d'accueil 31 de sorte que son profil est orthogonal avec l'axe longitudinal X7 ou l'axe de rive X25 respectivement. En l'espèce, l'ensemble des zones concaves d'accueil 31 sont ouvertes vers l'extérieur du treillis en étant réparties le long d'un profil d'accroche PA qui correspond au profil P1 du premier fil terminal 17. Ainsi, comme cela est illustré à la figure 5, le premier fil terminal 117 du deuxième tronçon 103 est accroché par l'ensemble des parties en crochet 29 du premier tronçon 3 en étant reçu dans les zones concaves d'accueil 31. Ce premier fil terminal 117 est en particulier inséré par l'extérieur du tronçon 3 jusqu'à venir en contact avec le fond des zones concaves d'accueil 31. Dans cette configuration, le deuxième fil terminal 19 du premier tronçon 3 s'étend parallèlement et à proximité du premier fil terminal 117 du deuxième tronçon 103. Les tronçons 3 et 103 sont alors liés l'un avec l'autre dans la direction des axes de rive X25 ou des axes longitudinaux X7, par l'intermédiaire des parties en crochet 29.

De manière optionnelle, chacun des fils de chaîne 7, y compris les fils de rive 25, comprend une partie en pont 33 qui est dirigée vers l'extérieur du treillis et qui s'étend à partir de la partie en crochet 29 en étant formée par une courbure locale du profil PL du fil de chaîne 7 concerné. La partie en pont 33 est coplanaire avec la partie en crochet 29 et s'étend à l'opposé de cette dernière par rapport à l'axe longitudinal X7 ou l'axe de rive X25 respectivement. La partie en pont 33 prolonge ainsi la concavité d'accueil 31 vers l'extérieur de la section transversale en U. La partie en pont 33 permet d'augmenter la profondeur de la zone concave 31 en prolongeant cette dernière par-delà l'axe longitudinal X7 ou l'axe de rive X25 respectivement, ce qui permet d'améliorer le maintien du fil terminal 117 du tronçon 103 au sein des zones concaves 31 parallèlement aux axes longitudinaux X7.

Par ailleurs, chaque partie latérale 11 du deuxième fil terminal 19 comprend une sous-partie interne 35 qui s'étend à partir de la partie centrale 9 de ce fil terminal 19. Parallèlement à l'un des axes X7, les parties latérales 11 sont alignées avec la sous-partie interne 35. Ainsi, les parties 11 et la sous-partie 35 d'une même aile 15 s'étendant dans un plan commun parallèle ou confondu avec le plan π15 de l'aile 15 concernée. Les sous-parties internes 35, tout comme chacune des parties latérales 11 de chacun des fils de trame 5 intermédiaires et du premier fil terminal 17, sont séparées l'une de l'autre par une première distance d1 qui est inférieure à un entraxe da des axes de rive X25. La première distance d1 et l'entraxe da sont mesurés parallèlement au fond 13 et perpendiculairement aux fils de rive 25, tel que cela est visible à la figure 4.

Chacune des parties latérales 11 du deuxième fil terminal 19 comprend une ailette d'encliquetage 37 qui est formé par le profil P2 du fil terminal 19. Les ailettes d'encliquetage 37 s'étendent dans le plan transversal défini par le fil terminal 19 et sont dirigées à l'opposé l'une de l'autre. En d'autre termes, chacune des ailettes 37 est dirigée à l'écart de la partie latérale 11 opposée du fil terminal 19. En pratique, la sous-partie interne 35 s'étend entre la partie centrale 9 et l'ailette d'encliquetage 37 adjacente.

Chaque ailette d'encliquetage 37 comprend une sous-partie oblique 39, qui prolonge la sous-partie interne 35, de sorte que les sous-parties obliques 39 s'éloignent de la partie centrale 9 en divergeant l'une de l'autre selon une pente douce et rectiligne. Les sous-parties obliques 39 sont ainsi disposées en V dans le plan transversal du fil terminal 19. Chaque sous-partie oblique 39 est terminée par un coude extrémal 41 de l'ailette d'encliquetage 37. Tel qu'illustré à la figure 4, les coudes 41 sont séparés par une deuxième distance d2 qui est supérieure à l'entraxe da des axes de rive X25, la deuxième distance d2 étant mesurée parallèlement à l'entraxe da. Les coudes extrémaux 41 sont recourbés vers l'intérieur de la section transversale en U du treillis, dans le plan du fil terminal 19.

Chaque ailette d'encliquetage 37 comprend en outre une sous-partie d'épaulement 43. Chaque sous-partie d'épaulement 43 prolonge le coude extrémal 41 vers l'intérieur de la section transversale en U et s'étend dans le plan du fil terminal 19, en direction de la partie latérale 11 opposée du fil terminal 19 puis à l'opposé de la partie centrale 9, autour de l'axe de rive X25. En pratique, la sous-partie d'épaulement 43 présente sensiblement une forme d'arc de cercle, par exemple un quart de cercle, et se termine par une extrémité qui est placée dans l'axe de la sous-partie interne 35. L'extrémité de la sous-partie d'épaulement 43 est confondue avec une extrémité du deuxième fil terminal 19. Ainsi, lorsque le premier tronçon 3 et le deuxième tronçon 103 sont assemblés, tel qu'illustré à la figure 5, chaque fil de rive 125 du deuxième tronçon 103 est en appui radial, par rapport à leur axe X125 respectif, sur l'une des ailettes d'encliquetage 37 du premier tronçon 3, et en particulier sur la sous-partie d'épaulement 43 de l'ailette 37 concernée, qui vient en pratique entourer le fil de rive 125 sur une partie de sa circonférence. Dans cette situation, les fils de rive 25 et 125 sont coaxiaux. De manière générale, les fils de chaîne 7 sont chacun coaxiaux avec l'un des fils de chaîne 107. Les plans transversaux des fils 5 et 105 sont quant eux parallèles. Dans cette situation, les ailettes d'encliquetage 37 maintiennent, conjointement avec les parties en crochet 29, le tronçon 3 par rapport au tronçon 103 selon toutes les directions de l'espace parallèles aux plans πN. En définitive, les tronçons 3 et 103 sont solidarisés l'un avec l'autre dans toutes les directions de l'espace.

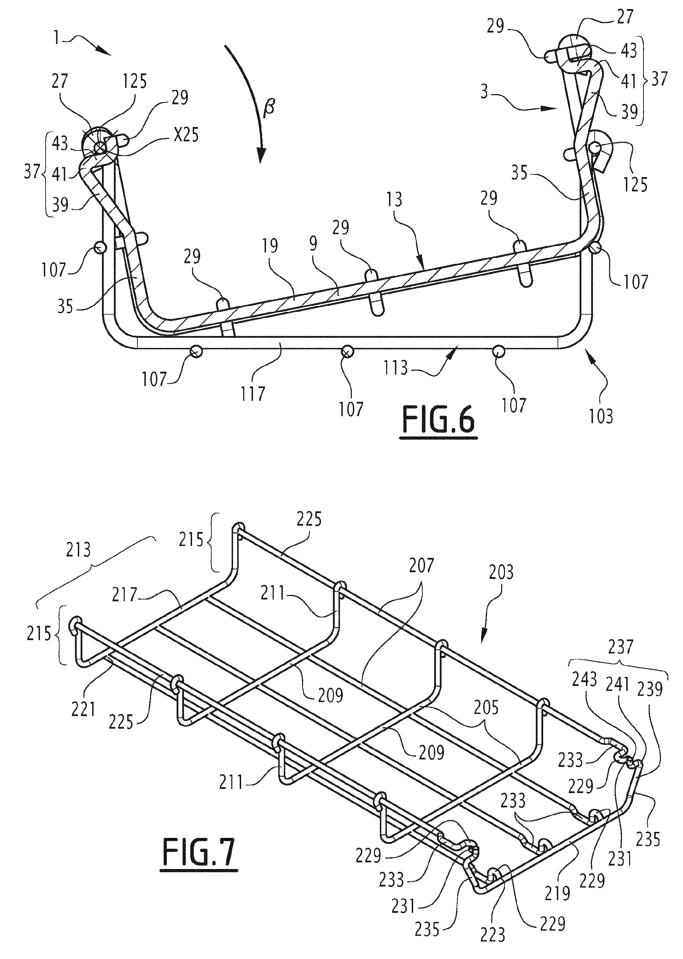

Pour obtenir le chemin de câbles représenté à la figure 5, on met en oeuvre un procédé de montage de ce chemin de câble qui est décrit dans ce qui suit. Dans un premier temps, on met en appui radial un premier fil de rive 125 du deuxième tronçon 103 contre la sous-partie d'épaulement 43 d'une première des ailettes d'encliquetage 37 du premier tronçon 3, tel qu'illustré sur la figure 6. Sur cette figure, le chemin de câbles 1 est coupé dans le plan transversal défini par le deuxième fil terminal 19 du premier tronçon 3. Lors de cette étape, on fait en sorte d'aligner axialement l'axe de rive 25 avec le fil de rive 125 qui est mis en appui radial contre l'ailette d'encliquetage 37. Lors de cette étape de mise en appui radial, le tronçon 3 est incliné par rapport au tronçon 103 autour de l'axe X25, de sorte que les plans d'extension respectifs des ailes 15 et 115 sont sécants et concourant selon un axe qui est coaxial ou parallèle avec l'axe X25.

Dans un second temps, pour solidariser les tronçons 3 et 103, on fait basculer autour de l'axe de rive X25 le deuxième tronçon 103 par rapport au premier tronçon selon la flèche β à la figure 6, de manière à rapprocher le fond 13 du fond 113 jusqu'à ce qu'ils deviennent coplanaires. Si l'on se place dans le plan de coupe de la figure 6, le premier tronçon 3 est ainsi basculé depuis l'extérieur vers l'intérieur de la section transversale en U du deuxième tronçon 103. Le basculement est effectué par l'intermédiaire de l'appui radial du premier fil de rive 125 du deuxième tronçon 103 sur l'ailette d'encliquetage 37 du premier tronçon 103 et en particulier sur la sous-partie interne 35 de cette ailette 37. Le fil de rive 125 opposé vient alors en contact avec la sous-partie oblique 39 de la deuxième ailette 37, laquelle est opposée à la première ailette 37 sur laquelle s'appuie le basculement. La mise en contact de ce deuxième fil de rive 125 avec la sous-partie oblique 39 entraine une déformation élastique du deuxième fil terminal 19 du tronçon 3, ce qui a pour effet de rapprocher ses parties latérales 11 l'une vers l'autre. En pratique, le premier fil terminal 117 du deuxième tronçon 103 est également déformé, de sorte que les parties latérales 111 de ce fil 117 sont écartées l'une de l'autre. En effet, le deuxième fil de rive 125 exerce un appui sur la deuxième ailette d'encliquetage 37 au fur et à mesure de la progression du deuxième fil de rive 125 le long de la sous-partie oblique 39 concernée lors du basculement. Au fur et à mesure que le deuxième fil de rive 125 progresse le long de la sous-partie oblique 39, la déformation du deuxième fil terminal 19, et du premier fil terminal 117, s'accentue jusqu'à une valeur maximale qui est atteinte lors de l'arrivée du deuxième fil de rive 125 au niveau du coude extrémal 41. Une fois la deuxième ailette d'encliquetage 37 franchie, et en particulier une fois le coude extrémal 41 franchi, par le deuxième fil de rive 125 du deuxième tronçon, le deuxième fil terminal 19 reprend sa forme initiale, c'est-à-dire reprend la forme du profil P2 décrit dans ce qui précède, par élasticité du deuxième fil terminal 19. Les deux fils de rive 125 sont alors chacun en appui radial sur l'une des sous-parties d'épaulement 43 associée à l'une des ailettes d'encliquetage 37 du premier tronçon 3. Le tronçon 103 et le tronçon 3 sont alors encliquetés et solidaires. Ce phénomène d'encliquetage est obtenu notamment grâce au rapport qu'il existe entre les distances d1, d2 et de l'entraxe da définis ci-avant.

Par ailleurs, grâce à la disposition spatiale des parties en crochet 29, lorsque les tronçons 3 et 103 sont encliquetés, le premier fil terminal 117 du deuxième tronçon 103 est également introduit dans les zones concaves d'accueil 31 du premier tronçon 3. Ainsi, en même temps que l'encliquetage, le basculement selon la flèche β du tronçon 3 par rapport au tronçon 103 permet aussi l'introduction du premier fil terminal 117 dans les zones concaves d'accueil 31. On comprend que le tronçon 3 peut être solidarisé au tronçon 103 à l'aide d'une seule opération de basculement d'un tronçon par rapport à l'autre. L'assemblage des tronçons 3 et 103 est ainsi particulièrement rapide et facile à effectuer.

Le démontage est tout aussi aisé. En effet, tel qu'illustré à la figure 4, pour démonter les tronçons 3 et 103 l'un de l'autre, il suffit d'appliquer un effort F1, dirigé vers l'intérieur de la section transversale du tronçon 3, sur l'une des parties latérales 11 du deuxième fil terminal 19 du premier tronçon 3, tout en appliquant un effort F2, visible à la figure 5, de sens opposé sur la partie latérale 111 du premier fil terminal 117 correspondante du deuxième tronçon 103. On ramène ainsi les coudes extrémaux 41 des ailettes d'encliquetage 37 l'un vers l'autre jusqu'à ce que l'un de ces deux coudes 41 puisse être franchi par l'un des fils de rive 125 du deuxième tronçon 103. On effectue ensuite un basculement du tronçon 3 par rapport au tronçon 103 dans le sens inverse de la flèche β.

De manière avantageuse, tel qu'illustré à la figure 4, la distance d1 séparant les sous-parties internes 35 est inférieure à une distance d3, mesurée parallèlement à d1, séparant les parties latérales 11 du premier fil terminal 17. Par ailleurs, la partie centrale 9 du deuxième fil de terminal 19 est décalée par rapport au plan rrl3 du fond 13, en direction des fils de rive 25, cette partie centrale 9 étant parallèle au plan π13. Les sous-parties internes 35 du tronçon 3 sont ainsi légèrement en retrait par rapport aux parties latérales 111 de du premier fil terminal 117 du tronçon 103 adjacent. De même, la partie centrale 9 du deuxième fil terminal 19 du tronçon 3 est en retrait par rapport à la partie centrale 109 du premier fil terminal 117 du tronçon 103 adjacent. Cela permet un montage du tronçon 3 avec le tronçon 103 en dépit de l'épaisseur des soudures du treillis

La figure 7 représente un tronçon 203 selon un deuxième mode de réalisation conforme à l'invention. Les références numériques associées à ce deuxième mode de réalisation de la figure 7 ont été augmentées de 200 par rapport à celles du premier mode de réalisation de la figure 1 pour désigner des éléments similaires ou identiques.

Le tronçon 203 est lui aussi formé par un treillis de fils métalliques qui comprend des fils de chaîne 207 et des fils de trame 205, qui comprennent chacun une partie centrale 209 et deux parties latérales 211 présentant une inclinaison par rapport à la partie centrale en étant disposées en U, de sorte que les parties centrales 209 définissent un fond 213 et que les parties latérales définissent deux ailes 215. Deux des fils de trame 205 forment respectivement un premier fil terminal 217 et un deuxième fil terminal 219, chacune des parties latérales du deuxième fil terminal 219 comprenant une ailette d'encliquetage 237.

Chaque aile 215 du tronçon 203 n'inclut qu'un seul fil de chaîne formé en l'espèce par un fil de rive 225 qui relie chacun les fils de trame 205 entre eux et présente une extrémité 223 reliée au deuxième fil terminal 219. Les ailes 215 du tronçon 203 sont ainsi moins hautes que les ailes 15 du tronçon 3. De ce fait, la sous-partie interne 235 est de longueur réduite par rapport à la sous-partie interne 35.

Chaque fil de rive 225 comprend, à partir de l'extrémité 223, une partie en crochet 229 qui forme une zone concave d'accueil 231 d'un fil, qui est ouverte dans une direction opposée à l'autre fil de rive 225.

En variante, le treillis du tronçon comporte plus ou moins de fils de trame et de chaîne que dans les deux modes de réalisation décrits dans ce qui précède. Au minimum, chaque aile du tronçon comprend un fil de chaîne formant un fil de rive et chaque fond du tronçon comprend un fil de chaîne.

En variante, les fils constitutifs du tronçon 3, 103 ou 203 peuvent être réalisés en matériaux synthétiques.

Les modes de réalisations et variantes décrits dans ce qui précèdent peuvent être combinés pour créer de nouveaux modes de réalisation.

## Revendications

1. Tronçon (3 ; 103 ; 203) de chemin de câbles (1), formé par un treillis de fils soudés qui comprend :
- au moins deux fils de trame (5 ; 105 ; 205), qui comprennent chacun une partie centrale (9 ; 109 ; 209) et deux parties latérales (11 ; 111 ; 211) présentant une inclinaison par rapport à la partie centrale en étant disposées en U, de sorte que les parties centrales définissent un fond (13 ; 113 ; 213) du treillis et que les parties latérales définissent deux ailes (15 ; 115 ; 215) du treillis, deux des fils de trame (5 ; 105 ; 205) formant respectivement un premier fil terminal (17 ; 117 ; 217) et un deuxième fil terminal (19 ; 119 ; 219) du treillis, chacune des parties latérales du deuxième fil terminal comprenant une ailette d'encliquetage (37 ; 137 ; 237) dirigée à l'écart de l'autre partie latérale du deuxième fil terminal, chaque ailette d'encliquetage étant formée par un profil (P2) selon lequel le deuxième fil terminal est conformé, et
- des fils de chaîne (7 ; 107 ; 207), qui relient chacun les fils de trame (5 ; 105 ; 205) entre eux et présentent une extrémité (23 ; 123 ; 223) reliée au deuxième fil terminal, les fils de chaîne (7 ; 107 ; 207) incluant deux fils de rive (25 ; 125 ; 225), qui relient chacun les fils de trame (5 ; 105 ; 205) entre eux par l'intermédiaire de l'une de leurs parties latérales respectives,
le tronçon (3 ; 103 ; 203) étant **caractérisé en ce que** chaque fil de rive (25 ; 125 ; 225) comprend, à partir de l'extrémité (23 ; 123 ; 223), une partie en crochet (29 ; 129 ; 229) qui forme une zone concave (31 ; 131 ; 231) d'accueil en forme de U d'un premier fil terminal (117) d'un autre tronçon de chemin de câbles (103) et **en ce que** la zone concave d'accueil a sa concavité orientée dans une direction opposée à l'autre fil de rive.

2. Tronçon de chemin de câbles (3; 103; 203) selon la revendication 1, **caractérisé en ce que** les ailettes d'encliquetage (37 ; 137 ; 237) s'étendent dans un plan transversal (π2) défini par le deuxième fil terminal (19 ; 119 ; 219).

3. Tronçon de chemin de câbles (3 ; 103 ; 203) selon l'une quelconque des revendications précédentes, **caractérisé en ce que** :
- les fils de rive (25 ; 125 ; 225) définissent chacun un axe de rive (X25) du treillis,
- chacune des parties latérales (11; 111; 211) du deuxième fil terminal (19; 119; 219) comprend une sous-partie interne (35 ; 135 ; 235), qui s'étend entre la partie centrale (9 ; 109 ; 209) et l'ailette d'encliquetage (37), les sous-parties internes étant séparées l'une de l'autre par une première distance (d1), la première distance et l'entraxe étant mesurés parallèlement au fond (13 ; 113 ; 213) du treillis et perpendiculairement aux fils de rive,
- chaque ailette d'encliquetage (37; 137; 237) comprend :
o une sous-partie oblique (39; 139; 239), qui prolonge la sous-partie interne, les sous-parties obliques s'éloignant de la partie centrale (9; 109; 209) en divergeant l'une de l'autre,
o un coude extrémal (41; 141; 241) terminant la sous-partie oblique, les coudes extrémaux étant séparés par une deuxième distance (d2) qui est supérieure à un entraxe (da) des axes de rive, la deuxième distance étant mesurée parallèlement à l'entraxe, et
o une sous-partie d'épaulement (43 ; 143 ; 243), qui prolonge le coude extrémal et s'étend en direction de l'autre partie latérale, puis à l'opposé de la partie centrale, autour de l'axe de rive.

4. Tronçon de chemin de câbles (3 ; 103 ; 203) selon l'une quelconque des revendications précédentes, **caractérisé en ce que** chaque fil de chaîne (7 ; 107 ; 207) est pourvu d'une partie en crochet (29 ; 129 ; 229) qui forme une zone concave (31 ; 131 ; 231), d'accueil d'un premier fil terminal (17 ; 117 ; 217) d'un autre tronçon de chemin de câbles, **en ce que** chaque zone concave d'accueil a sa concavité orientée vers l'extérieur du treillis et **en ce que** les zones concaves d'accueil sont réparties le long d'un profil d'accroche (PA) correspondant à un profil (P1) du premier fil terminal (17; 117; 217).

5. Tronçon de chemin de câbles (3 ; 103 ; 203) selon la revendication 4, **caractérisé en ce que** chacun des fils de chaîne (7 ; 107 ; 207) comprend une partie en pont (33 ; 133 ; 233) qui s'étend, à partir de la partie en crochet (29 ; 129 ; 229) vers l'extérieur du treillis.

6. Tronçon de chemin de câbles (3 ; 103 ; 203) selon l'une quelconque des revendications précédentes, **caractérisé en ce que** chaque partie en crochet (29; 129; 229) s'étend entre le deuxième fil terminal (19 ; 119 ; 219) et un fil de trame intermédiaire (5 ; 105 ; 205) le plus proche du deuxième fil terminal.

7. Tronçon de chemin de câbles (3 ; 103 ; 203) selon l'une quelconque des revendications précédentes, **caractérisé en ce que** les fils de trame (5 ; 105 ; 205) présentent tous un profil (P1, PN) identique, hormis le deuxième fil terminal (19; 119; 219) qui présente un profil (P2) différent de celui des autres fils de trame (5; 105; 205).

8. Chemin de câbles (1) comprenant au moins un premier tronçon (3 ; 203) et un deuxième tronçon (103) conformes à l'une quelconque des revendications 1 à 7, le premier fil terminal (117) du deuxième tronçon étant accroché dans les parties en crochet (29, 229) du premier tronçon.

9. Chemin de câbles (1) selon la revendication 8, **caractérisé en ce que** chaque fil de rive (125) du deuxième tronçon (103) est en appui radial sur l'une des ailettes d'encliquetage (37 ; 237) du premier tronçon (3 ; 203).

10. Procédé de montage d'un chemin de câbles (1) conforme à la revendication 8 ou 9, dans lequel on met en oeuvre les étapes suivantes :
a) mise en appui radial d'un premier des fils de rive (125) du deuxième tronçon (103) contre une première ailette d'encliquetage (37 ; 237) parmi les deux ailettes d'encliquetage du premier tronçon (3 ; 203),
b) basculement (β), autour d'un axe de rive (X25) défini par le premier fil de rive (125), du deuxième tronçon par rapport au premier tronçon, par l'intermédiaire de l'appui radial du premier fil de rive sur l'ailette d'encliquetage (37 ; 237) du premier tronçon, jusqu'à introduction du premier fil terminal (117) du deuxième tronçon dans les zones concaves d'accueil (31 ; 231) du premier tronçon.

11. Procédé de montage selon la revendication 10, **caractérisé en ce que** l'étape b) de basculement (β) comporte les sous-étapes suivantes :
b1) déformation élastique du deuxième fil terminal (19; 219) du premier tronçon (3 ; 203) de manière à rapprocher les parties latérales (11; 211) de ce deuxième fil terminal l'une de l'autre, sous l'action du deuxième fil de rive du deuxième tronçon (103) exerçant un appui sur la deuxième ailette d'encliquetage (37 ; 237) du premier tronçon au fur et à mesure de sa progression le long de cette deuxième ailette lors du basculement,
b2) retour du deuxième fil terminal du premier tronçon dans sa forme initiale par élasticité de ce deuxième fil terminal, une fois la deuxième ailette franchie par le deuxième fil de rive.
